(19) Europäisches Patentamt
European Patent Office
Office européen des brevets

(11) Veröffentlichungsnummer: **0 507 214 A2**

(12) # EUROPÄISCHE PATENTANMELDUNG

(21) Anmeldenummer: **92105218.9**

(22) Anmeldetag: **26.03.92**

(51) Int. Cl.$^5$: **C08J 9/14**

(30) Priorität: **28.03.91 DE 4110283**

(43) Veröffentlichungstag der Anmeldung:
**07.10.92 Patentblatt 92/41**

(84) Benannte Vertragsstaaten:
**AT BE CH DE DK ES FR GB GR IT LI NL SE**

(71) Anmelder: **HOECHST AKTIENGESELLSCHAFT**
**Postfach 80 03 20**
**W-6230 Frankfurt am Main 80(DE)**

(72) Erfinder: **Deger, Hans-Matthias, Dr.**
**Herrnpfad 10**
**W-6238 Hofheim am Taunus(DE)**
Erfinder: **Behme, Klaus-Jürgen**
**Kurmainzer Strasse 25**
**W-6239 Eppstein/Taunus(DE)**
Erfinder: **Schütz, Claudia**
**Dresdner Strasse 9**
**W-6093 Flörsheim am Main(DE)**

(54) **Verfahren zur Herstellung von Schaumstoffen mit Hilfe von verzweigtem Dodekafluorhexan.**

(57) Die Erfindung betrifft ein Verfahren zur Herstellung von Schaumstoffen auf Basis von Polyisocyanaten durch Umsetzung von Polyisocyanaten, Verbindungen mit mindestens zwei gegenüber Isocyanatgruppen reaktionsfähigen Wasserstoffatomen, Treibmitteln und gegebenenfalls weiteren Zusatzmitteln. Dabei wird ein Treibmittel verwendet, das zu mindestens 10 Mol-% aus einem oder mehreren verzweigten Dodekafluorhexanen besteht.

EP 0 507 214 A2

Rank Xerox (UK) Business Services

Die Erfindung betrifft ein Verfahren zur Herstellung von Schaumstoffen auf Basis von Polyisocyanaten, insbesondere von Polyurethan- und Polyisocyanuratschaumstoffen. Die Herstellung solcher Schaumstoffe ist bekannt und beispielsweise im Kunststoff-Handbuch, Band VII, Polyurethane, Carl Hanser Verlag München, Wien (1983), Seiten 246 bis 331, sowie in EP-A-0 077 964, EP-A-0 334 059, DE-AS 1 694 138 (= GB-PS 1 209 243) beschrieben.

In Ullmanns Enzyklopädie der technischen Chemie (1980), Band 19, Seiten 301 bis 341, sind die verwendbaren Rohstoffe und die möglichen Verfahren zur Herstellung von Polyurethanhartschaumstoffen zusammenfassend beschrieben.

Des weiteren sind entsprechende Hinweise in Kirk-Othmer, Encycl. of Chem. Technology, 3rd edition, Vol 11 (1980), Pages 87-89 und Vol. 23 (1983), Pages 576-607 zu finden.

Übliche Treibmittel für Polyurethane sind Kohlendioxid - das bei der Herstellung der Polyurethane aus Polyisocyanaten und Verbindungen mit reaktivem Wasserstoff durch Zusatz von Wasser erzeugt wird - und/oder sogenannte "physikalische Treibmittel", nämlich leicht flüchtige organische Substanzen, wie Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, Chlorhexafluorpropan, ferner Butan, Hexan, Heptan oder Diethylether. Die Verwendbarkeit fluorierter Kohlenwasserstoffe zur Herstellung von wärmeisolierenden Polyurethanschaumstoffen ist z.B. aus der DE-PS 1 111 381 bekannt. Auch anorganische Treibmittel, z.B. Luft, $CO_2$ oder $NO_2$, kommen infrage. Weitere Einzelheiten über die Verwendung von Treibmitteln sind im Kunststoff-Handbuch, Band VII, Carl-Hanser-Verlag, München (1966), z.B. auf den Seiten 108 und 109,453 bis 455 und 507 bis 510 beschrieben.

An physikalische Treibmittel für Polyurethanschaumstoffe werden bestimmte Anforderungen gestellt. Es ist eine gute Vermischbarkeit der Treibmittel mit den üblichen Rohstoffen erforderlich, sie sollen aber im entstehenden Polyurethan unlöslich sein, um eine gute Materialqualität der Schaumstoffe zu gewährleisten. Des weiteren wird wegen der bei der Verschäumung auftretenden Reaktionswärme, die zu einer Temperaturerhöhung bis etwa 200 °C bei der Aufschäumung großvolumiger Teile führen kann, eine gute thermische Stabilität des Treibmittels erwartet. Außerdem sollten die Treibmittel vorzugsweise unbrennbar sein. Alle diese Anforderungen führten im Lauf der Entwicklung der Polyurethanschaum-Technologie dazu, fluorierte Chlorkohlenwasserstoffe (FCKW), insbesondere Trichlorfluormethan (FCKW 11), als physikalische Treibmittel zu verwenden.

Die FCKW stehen aufgrund ihres Chlorgehaltes jedoch inzwischen im Verdacht, die Ozonhülle der Erde zu schädigen. Es ist deshalb notwendig, auf die Verwendung dieser Verbindungen baldmöglichst zu verzichten und stattdessen andere Substanzen, die kein Ozon-Schädigungspotential haben, als physikalische Treibmittel zu verwenden.

Diskutiert wird der Verzicht auf FCKW als Treibmittel und Dämmgas zugunsten von $CO_2$, das - wie oben erwähnt - durch Zusatz von Wasser bei der Herstellung der Polyurethane aus Polyisocyanaten entsteht. Diese Methode ist zwar für manche Schaumstoffe vertretbar, führt aber insbesondere bei Hartschaumstoffen zu großen Nachteilen, weil die so hergestellten Schaumstoffe eine erhöhte Wärmeleitfähigkeit und damit ein geringeres Wärmedämmvermögen aufweisen als die mit Hilfe von FCKW hergestellten Schaumstoffe.

In der deutschen Patentanmeldung P 4 008 042.0 wird beschrieben, daß Fluoralkane in gleicher Weise wie FCKW zur Aufschäumung von Schaumstoffen auf Basis von Polyisocyanaten geeignet sind und die Wärmeleitfähigkeit der mit ihnen geschäumten Hartschaumstoffe wesentlich niedriger ist als die Wärmeleitfähigkeit der mit $CO_2$ geschäumten. Dort wird auch angegeben, daß man diese Fluoralkane und $CO_2$ gleichzeitig als Treibmittel benutzen kann, wobei schon bei relativ geringem Anteil an Fluoralkan (und entsprechend hohem $CO_2$-Anteil und daher hohem Wasseranteil in der Hartschaum-Rezeptur) eine erhebliche Verbesserung der Wärmedämmwirkung erreicht wird.

Überraschenderweise wurde nun gefunden, daß bei Verwendung von verzweigtem Dodekafluorhexan der Formel $C_6H_2F_{12}$ eine besonders starke Erniedrigung der Wärmeleitfähigkeit und dadurch eine besonders starke Verbesserung der Wärmedämmung bei gleichem Materialeinsatz gegenüber den mit $CO_2$ geschäumten Schaumstoffen erreicht wird.

Gegenstand der Erfindung ist ein Verfahren zur Herstellung von Schaumstoffen auf Basis von Polyisocyanaten durch Umsetzung von Polyisocyanaten, Verbindungen mit mindestens zwei gegenüber Isocyanatgruppen reaktionsfähigen Wasserstoffatomen, Treibmitteln und gegebenenfalls weiteren Zusatzmitteln, dadurch gekennzeichnet, daß man ein Treibmittel verwendet, das zu mindestens 10 Mol-% aus einem oder mehreren verzweigten Dodekafluorhexanen besteht.

Vorzugsweise bestehen mindestens 20 Mol-%, insbesondere 50-80 Mol-% des Treibmittels aus mindestens einem verzweigten Dodekafluorhexan. Das Treibmittel kann jedoch im Prinzip auch zu 100 Mol-% daraus bestehen.

Wenn jedoch - was im allgemeinen der Fall sein wird - nicht das gesamte Treibmittel aus (mindestens einem) Dodekafluorhexan besteht, dann besteht der Rest aus einem der obengenannten konventionellen Treibgase, wobei man im allgemeinen jedoch aus den oben genannten Gründen auf FCKW weitgehend oder ganz verzichten wird. Vorzugsweise besteht der Rest dann zumindest teilweise aus $CO_2$, welches durch Zusatz einer geeigneten Menge an Wasser bei der Umsetzung der Polyisocyanate zu den Schaumstoffen erzeugt wird. Eine "geeignete" Menge Wasser ist dabei eine Menge, die den gewünschten Anteil an $CO_2$ erzeugt.

Besonders bevorzugt ist ein Treibgas, da nur aus mindestens einem verzweigten Dodekafluorhexan und (durch Wasserzugabe erzeugtem) $CO_2$ besteht, d.h. daß der oben angesprochene "Rest" des Treibgases nur aus $CO_2$ besteht.

Die Herstellung von verzweigten Dodekafluorhexanen wird beschrieben in Chemical Abstracts, Band 100 (25), Nr. 208713q; Band 101 (5), Nr. 37949w; Band 78 (25), Nr. 158821p und Band 67 (19), Nr. 90380j.

Dort werden als Strukturformeln und GAS (Chemical Abstracts System) Nummern angegeben:

(I) $(CF_3)_2$-CF-CHF-CHF-$CF_3$ (CAS 85720-78-1)

(II) 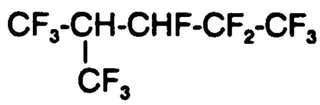 (CAS 90278-00-5)

(III) 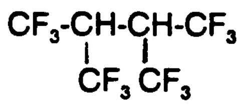 (CAS 17737-22-3)

Vorzugsweise verwendet man daher mindestens eins dieser drei verzweigten Dodekafluorhexane, insbesondere aber (I). Es läßt sich aber nicht ausschließen, daß bei der Herstellung von (I) bis (III) auch weitere Isomere zumindest in geringen Mengen entstehen und dann in (I) bis (III) enthalten sind. Sie können beim erfindungsgemäßen Verfahren mitverwandt werden.

Ein weiterer Gegenstand der Erfindung sind Schaumstoffe auf Basis von Polyisocyanaten, die nach dem obigen Verfahren erhältlich sind.

Bei Verwendung der verzweigten Dodekafluorhexane kann man die bisher üblichen Schaumstoffe einsetzen und, wie oben gesagt, die Anteile an Wasser oder konventionellem physikalischem Treibmittel weitgehend reduzieren oder sogar ganz auf sie verzichten.

Geeignete Polyisocyanate für das erfindungsgemäße Verfahren sind die für diesen Zweck üblichen aliphatischen, cycloaliphatischen oder aromatischen Di- oder Polyisocyanate. Bevorzugt sind 2,4- und 2,6-Toluyldiisocyanat, Diphenylmethandiisocyanat, Polymethylenpolyphenylisocyanat und Mischungen davon. Es können auch Carbodiimidgruppen, Urethangruppen, Allophanatgruppen, Isocyanuratgruppen, Harnstoffgruppen oder Biuretgruppen enthaltende Polyisocyanate, die man als "modifizierte Polyisocyanate" und "Isocyanat-Präpolymere" bezeichnet, verwendet werden.

Die Polyisocyanate werden mit Verbindungen umgesetzt, die mindestens zwei gegenüber Isocyanatgruppen reaktionsfähige Wasserstoffatome enthalten, beispielsweise Hydroxylgruppen aufweisende Verbindungen auf Polyether-, Polyester- und Aminbasis, sowie Amino- und/oder Carboxyl- und/oder Thiolgruppen aufweisende Verbindungen. Diese Verbindungen haben in der Regel 2-8 gegenüber Isocyanaten reaktionsfähige Wasserstoffatome.

Als Katalysatoren bei dieser Umsetzung werden, wie üblich, tertiäre Amine, die ggf. auch gegenüber Isocyanatgruppen aktive Wasserstoffatome enthalten können und/oder organische Metallverbindungen, vorzugsweise Zinnsalze von Carbonsäuren eingesetzt.

Außerdem mitverwendet werden im allgemeinen oberflächenaktive Zusatzstoffe, wie Emulgatoren und Schaumstabilisatoren. Bei den Emulgatoren handelt es sich z.B. um Salze von Fettsauren. Als Schaumstabilisatoren kommen oft Polyethersiloxane zum Einsatz.

Die nachfolgenden Beispiele erläutern die Erfindung. Sie betreffen typische Hartschaum-Rezepturen.

Im Vergleichsbeispiel wird neben aus Wasser entstandenem $CO_2$ das Treibmittel 1,1,1,2,2,3,3,4,4-Nonafluorhexan ($CF_3$-$CF_2$-$CF_2$-$CF_2$-$CH_2$-$CH_3$) mitverwendet.

Es zeigt sich, daß bei Verwendung der verzweigten Dodekafluorhexane eine im Vergleich zu unverzweigtem Fluorhexan noch geringere Wärmeleitfähigkeit resultiert. Dieser Effekt nimmt mit längerer Lagerzeit sogar noch zu.

Die verzweigten Dodekafluorhexane eingen sich auch zur Aufschäumung von weichen Schaumstoffen

mit offenzelliger Struktur und zur Herstellung von Schaumstoff-Formteilen mit zelligem Kern und kompakter Oberfläche gemäß DE-AS 1 694 138 (entsprechend GB-PS 1 209 243).

Die Eigenschaften der in den Beispielen hergestellten Schaumstoffe sind in der ihnen folgenden Tabelle angegeben.

Beispiele

Vergleichsbeispiel
(Verwendung von $CO_2$ und Nonafluorhexan als gemeinsames Treibmittel)

85 g Sucrose/Propylenoxid-Polyether der OH-Zahl 380,
15 g Ethylendiamin/Propylenoxid-Polyether der OH-Zahl 480,
1 g Schaumstabilisator (Typ DC 193 von Dow Corning Corp.), 1,5 g Dimethylcyclohexylamin, 3,0 g Wasser und 15 g 1,1,1,2,2,3,3,4,4-Nonafluorhexan wurden mittels eines Rührers mit ca. 3500 Umdrehungen pro sec 15 Sekunden lang innig vermischt, dann mit 180 g rohem Diphenylmethandiisocyanat (MDI handelsüblicher Oualität) 10 Sekunden innig vermischt und anschließend in eine Papierform gegossen. Die Aufschäumung des Gemisches begann nach ca. 15 Sekunden und war nach ca. 75 Sekunden beendet. Es resultierte ein harter Schaumstoff mit den in der Tabelle angegebenen Eigenschaften.

Beispiel 1:

Es wurde verfahren wie im Vergleichsbeispiel, jedoch wurde statt 1,1,1,2,2,3,3,4,4-Nonafluorhexan 18 g des erfindungsgemäßen verzweigten Dodekafluorhexans (I) $(CF_3)_2$-CF-CHF-CHF-$CF_3$ verwendet.

Beispiel 2:

45 g Sorbitol/Glycerin/Propylenoxid-Polyether der OH-Zahl 560,
15 g Ethylendiamin/Propylenoxid-Polyether der OH-Zahl 480,
20 g Glycerin/Propylenoxid-Polyether der OH-Zahl 160, 20 g Tetrabromphthalat-Diol der OH-Zahl 220, 20 g Trichlorethylphosphat, sowie je 1,0 g der mit den Handelsbezeichnungen DC 190 und DC 198 von der Dow Corning Corp. vertriebenen Schaumstabilisatoren, 1,0 g Dimethylcyclohexylamin, 2,2 g Wasser, 28 g des Dodekafluorhexans (I) und 137 g MDI wurden wie in den vorgenannten Beispielen vermischt und aufgeschäumt.

Tabelle

| | Mol-Verhältnis Wasser/Fluorhexan | Eigenschaften des Schaumstoffs | | |
|---|---|---|---|---|
| | | Rohdichte [kg/m³] | Wärmeleitfähigkeit [10 °C, mW/mK] gemessen nach | |
| | | | 1 Tag | 6 Wochen |
| Vergleichsbeispiel | 75/25 | 38 | 22,1 | 24,8 |
| Beispiel 1 | 75/25 | 38 | 16,7 | 19,1 |
| Beispiel 2 | 57/43 | 40 | 18,0 | 20,0 |

## Patentansprüche

1. Verfahren zur Herstellung von Schaumstoffen auf Basis von Polyisocyanaten durch Umsetzung von Polyisocyanaten, Verbindungen mit mindestens zwei gegenüber Isocyanatgruppen reaktionsfähigen Wasserstoffatomen, Treibmitteln und gegebenenfalls weiteren Zusatzmitteln, dadurch gekennzeichnet, daß man ein Treibmittel verwendet, das zu mindestens 10 Mol-% aus einem oder mehreren verzweigten Dodekafluorhexanen besteht.

2. Verfahren nach Anspruch 1, dadurch gekennzeichnet, daß man ein Treibmittel verwendet, das zu mindestens 20 Mol-% aus einem oder mehreren verzweigten Dodekafluorhexanen besteht.

3. Verfahren nach Anspruch 1, dadurch gekennzeichnet, daß man ein Treibmittel verwendet, das zu 50-80 Mol-% aus einem oder mehreren verzweigten Dodekafluorhexanen besteht.

4. Verfahren nach einem der Ansprüche 1 bis 3, dadurch gekennzeichnet, daß der Rest des Treibmittels zumindest teilweise aus $CO_2$ besteht, welches durch Zusatz von Wasser bei der Umsetzung der Polyisocyanate gebildet wird.

5. Verfahren nach einem der Ansprüche 1 bis 3, dadurch gekennzeichnet, daß der Rest des Treibmittels aus $CO_2$ besteht, welches durch Zusatz von Wasser bei der Umsetzung der Polyisocyanate gebildet wird.

6. Verfahren nach einem der Ansprüche 1 bis 5, dadurch gekennzeichnet, daß man ein oder mehrere der verzweigten Dodekafluorhexane der Formeln

(I) $(CF_3)_2$-CF-CHF-CHF-$CF_3$

(II) 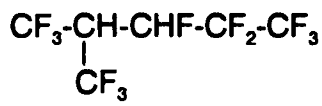

(III) 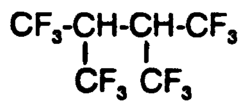

einsetzt.

7. Verfahren nach einem der Ansprüche 1 bis 5, dadurch gekennzeichnet, daß man das verzweigte Dodekafluorhexan der Formel

(I) $(CF_3)_2$-CF-CHF-CHF-$CF_3$

einsetzt.